# EUROPEAN PATENT SPECIFICATION

(11) **EP 1 820 309 B1**
(45) Date of publication and mention of the grant of the patent: **27.08.2008**
(21) Application number: 05850071.1
(22) Date of filing: 30.11.2005
(51) Int. Cl.: H04L 12/56

(54) **STREAMING MEMORY CONTROLLER**
STREAMING-SPEICHERSTEUERUNG
CONTROLEUR DE MEMOIRE EN CONTINU

(30) Priority: 03.12.2004 EP 04106274
(43) Date of publication of application: 22.08.2007
(73) Proprietor: Koninklijke Philips Electronics N.V., 5621 BA Eindhoven (NL)
(72) Inventor: BURCHARD, Artur, NL-5656 AA Eindhoven (NL); HEKSTRA-NOWACKA, Ewa, NL-5656 AA Eindhoven (NL); HARMSZE, Francoise, J., NL-5656 AA Eindhoven (NL); VAN DEN HAMER, Peter, NL-5656 AA Eindhoven (NL)
(74) Representative: van der Veer, Johannis Leendert
(86) International application number: PCT/IB2005/053970
(87) International publication number: WO 2006/059283

(56) References cited:
- US-A- 5 751 951
- US-A1- 2002 034 162
- US-B1- 6 405 256

## Description

The present invention relates to a memory controller and a method for coupling a network and a memory.

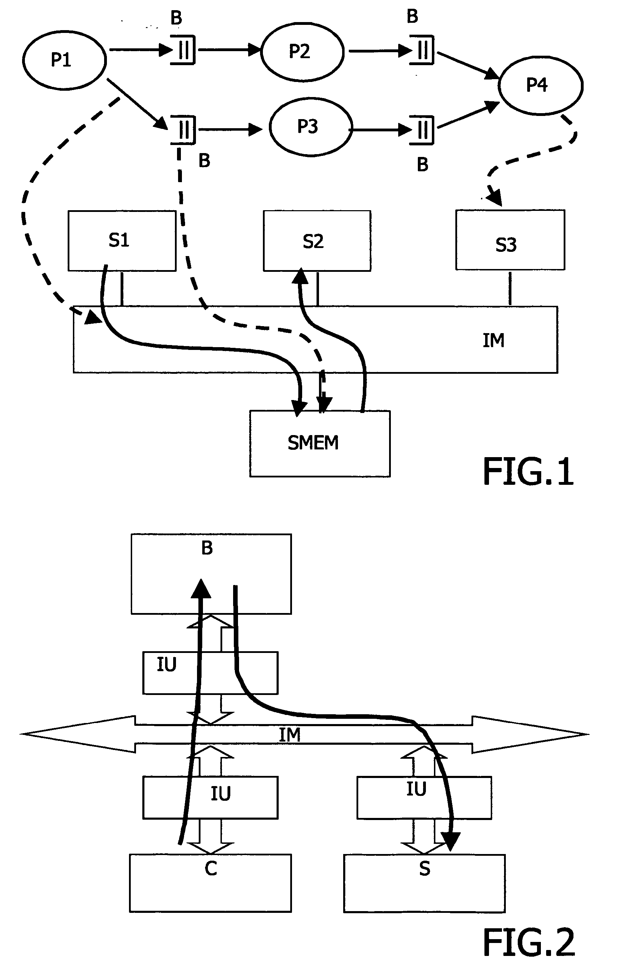

The complexity of advanced mobile and portable devices increases. The ever more demanding applications of such devices, the complexity, flexibility and programmability requirements intensify data exchange inside the devices. The devices implementing such applications often consist of several functions or processing blocks, here called subsystems. These subsystems typically are implemented as separate ICs, each having a different internal architecture that consists of local processors, busses, and memories, etc. Alternatively, various subsystems, may be integrated on an IC. At system level, these subsystems communicate with each other via a top-level interconnect, that provides certain services, often with real-time support. As an example of subsystems in a mobile phone architecture we can have, among others, base-band processor, display, media processor, or storage element. For support of multimedia applications, these subsystems exchange most of the data in a streamed manner. As an example of data streaming, reference is made to readout of an MP3 encoded audio file from the local storage by a media-processor and sending the decoded stream to speakers. Fig. 1 shows a basic representation of such a communication, which can be described as a graph of processes P1 -P4 connected via FIFO buffers B. Such an representation is often referred to as Kahn process network. The Kahn process network can be mapped on the system architecture, as described in E.A. de Kock et al., "YAPI: Application modeling for signal processing systems". In Proc. of the 37th. Design Automation Conference, Los Angeles, CA, June 2000, pages 402-405. IEEE, 2000. In such an architecture the processes are mapped onto the subsystems, FIFO buffers on memories SMEM, and communications onto the system-level interconnect IM.

Buffering is essential in a proper support of data streaming between the involved processes. Typically, FIFO buffers are used for streaming, which is in accordance to (bounded) Kahn process network models of streaming application. With increased number of multimedia applications that can run simultaneously the number of processes, real-time streams, as well as the number of associated FIFOs, substantially increases.

There exist two extreme implementations of streaming with respect to memory usage and FIFOs allocation. The first uses physically distributed memory, where FIFO buffers are allocated in a local memory of a subsystem. The second uses physically and logically unified memory where all FIFO buffers are allocated in a shared, often off-chip, memory. A combination thereof is also possible.

The FIFO buffers can be implemented in a shared memory using an external DRAM memory technology. SDRAM and DDR-SDRAM are the technologies that deliver large capacity external memory at low cost, with a very attractive cost to silicon area ratio.

Fig. 2 shows a basic architecture of a system on chip with a shared memory streaming framework. The processing units C, S communicate with each other via the buffer B. The processing units C, S as well as the buffer each are associated to an interface unit IU for coupling them to an interconnect means IM. In case of a shared memory date exchange, the memory can also be used for other purposes. The memory can for example also be used for the code execution or a dynamic memory allocation for the processings of a program running on a main processor.

Such a communication architecture or network, including the interconnect means, the interface units as well as the processing units C, S and the buffer B, may provide specific transport facilities and a respective infrastructure giving certain data transport guarantee such as for example a guaranteed throughput or a guaranteed delivery for an error-free transport of data or a synchronization service for synchronizing source and destination elements such that no data is lost due to the under or overflow of buffers. This becomes important if real-time streaming processing is to be performed by the system and a real-time support is required for all of the components.

Within many systems-on-chip (SoC) and microprocessor systems background memory (DRAM) are used for buffering of data. When the data is communicated in a streaming manner, and buffered as a stream in the memory, pre-fetch buffering can be used. This means that the data from the SDRAM is read beforehand and kept in a special (pre-fetch) buffer. When the read request arrives it can be served from local pre-fetch buffer, usually implemented in on-chip SRAM, without latency otherwise introduced by background memory (DRAM). This is similar to known caching techniques of random data for processors. For streaming, a contiguous (or better to say a predictable) addressing of data is used in a pre-fetch buffer, rather then a random address used in a cache. For more details, please refer to J. L. Hennessy and D. A. Patterson "Computer Architecture -- A Quantitative Approach"

On the other hand, due to DRAM technology, it is better to access (read or write) DRAM in bursts. Therefore, often a write-back buffer is implemented, which gathers many single data accesses into a burst of accesses of a certain size. Once the initial processing is done for the first DRAM access, every next data word, with address in a certain relation to the previous one (e.g. next, previous - depending on a burst policy), accessed in every next cycle of the memory can be stored without any further delay (within 1 cycle), for a specified number of accesses (2/4/8/full page). Therefore, for streaming accesses to memory, when addresses are increased or decreased in the same way for every access (e.g. contiguous addressing) the burst access provides the best performance at the lowest power dissipation. For more information regarding the principles of a DRAM memory, please refer to Micron's 128-Mbit DDRRAM specifications,
http://download.micron.com/pdf/datasheets/dram/ddr/128MbDDRx4x8x16.pdf, which is incorporated by reference.

Until now, controllers of external DRAM were designed to work in bus-based architectures. Buses provide limited services for data transport, simple medium access control, and best effort data transport only. In such architectures, the unit that gets the access to the bus automatically gets the access to the shared memory. Moreover, the memory controllers used in such systems are not more than access blocks optimized to perform numerous low latency reads or writes, often tweaked for processor random cache-like burst accesses. As a side effect of the low-latency, high-bandwidth, and high-speed optimizations of the controllers, the power dissipation of external DRAM is relatively high.

The above-mentioned network services are, however, only applicable within the network. As soon as a data exchange occurs to any component outside the network, the network service guarantees are not met. Within a shared memory architecture, data which is to be buffered will be typically exchanged via the physically unified memory such that data need to be transported to and from the memory, whereby the data will break the services provided by the network as neither a memory controller nor the memory itself supports any of the network services.

US 5,751,951 discloses a memory controller for coupling a memory to a network. The memory controller comprises a first network for connecting the memory controller to the network. The memory controller furthermore comprises a streaming memory unit having a buffer for temporarily storing at least part of the data streams and a buffer managing unit for managing a temporal storing of data streams in the buffer. The memory controller furthermore comprises an interface for exchanging data with the memory in bursts.

It is an object of the invention to provide a memory controller for coupling a network and a memory as well as a method for coupling a network and a memory, which together with the memory improve the predictable behavior of the communication between the network and the memory.

This object is solved by a memory controller according to claim 1 and by a method for coupling a network and a memory according to claim 3.

A memory controller is provided for coupling a memory to a network. The memory controller comprises a first interface, a streaming memory unit and a second interface. The first interface is used for connecting the memory controller to the network for receiving and transmitting data streams. The streaming memory unit is coupled to the first interface for controlling data streams between the network and the memory. The streaming memory unit comprises a buffer for temporarily storing at least part of the data streams and a buffer managing unit for managing the temporarily storing of the data streams in the buffer. The second interface is coupled to the streaming memory unit for connecting the memory controller to the memory in order to exchange data with the memory in bursts. The streaming memory unit is provided to implement network services of the network onto the memory.

Accordingly, with such a memory controller, a memory which does not implement the network services as provided by a network can be integrated with a communication network supporting specific network services. In other words, the same services will be applicable to the data being communicated within a network or to data which is exchanged with the memory sub-system.

According to an aspect of the invention, the first interface is implemented as a PCI-Express interface such that the properties and network services of a PCI-Express network can be implemented by the memory controller.

According to a further aspect of the invention, the memory is at least partly organized as FIFOs and a stream identifier is associated to every data stream from the network. The streaming memory unit is provided to control the data stream from/to the network by directing a particular data stream to a particular FIFO in the memory according to the stream identifier of the data stream. Furthermore, an arbitration is performed between the different data streams for accessing the memory. The second interface is arranged to exchange a relatively course grain stream of data with the memory and a relatively fine grain stream of data with the network. As the stream identifier of a data stream is used to map the data stream onto a FIFO in the memory, a simple addressing scheme is realized.

According to a further aspect of the invention, the network is implemented as a PCI-Express network and a PCI-Express ID is used in the network for addressing purposes. The first interface is then implemented as a PCI-Express interface. The streaming memory unit converts a PCI-Express ID into a FIFO memory address as well as a FIFO memory address into a PCI-Express ID. Accordingly, the PCI-Express device addressing scheme is used to address the FIFO buffers within the memory.

The invention also relates to a method for coupling a memory to a network. Data streams are received and transmitted via a first interface (PI) for connecting a memory controller to the network. The data streams between the network and the memory is controlled by a streaming memory unit (SMU). At least part of the data streams is temporarily stored in a buffer. The temporarily storing of the data streams in a buffer is managed. The streaming memory controller is coupled to the memory via a second interface and data is exchanged with the memory in bursts. network services of the network are implemented onto the memory.

The invention relates to the idea of introducing a steaming memory controller associated to a shared memory. The streaming memory controller is able to provide the same services as a network. Such services may be flow control, virtual channels and memory bandwidth arbitration tuned to network bandwidth arbitration. Such services guaranteed by the network will then also be guaranteed by the memory controller if data leaves the network in order to be buffered in the memory. The integrity of the network services will thus be preserved from the source of the data to its destination.

Other aspects of the invention are subject to the dependent claims.

These and other aspects of the invention are apparent from and will be elucidated with reference to the embodiments describe hereinafter and with respect to the following figures.
Fig. 1 shows a basic representation of a Kahn process network and mapping of it onto a shared memory architecture;
Fig. 2 shows a basic architecture of a system on chip with a shared memory streaming framework;
Fig. 3 shows a block diagram of a system on chip according to the first embodiment;
Fig. 4 shows the logical architecture of a SDRAM for the state when the memory clock is enabled;
Fig. 5 shows a block diagram of a streaming memory controller SMC according to a second embodiment;
Fig. 6 shows a block diagram of a logical view of the streaming memory controller SMC;
Fig. 7 shows a block diagram of an architecture of a system on chip according to a third embodiment;
Fig. 8 shows a format of an ID within a PCI-Express network;
Fig. 9 shows a configuration within a PCI-Express system;
Fig. 10 shows a block diagram of a system on chip according to the fourth embodiment;
Fig. 11 shows an example of the memory allocation within the memory of Fig. 10; and
Fig. 12 shows a power dissipation of external DDR-SDRAM versus the burst size of the access and worst-case delay versus buffer size in network packets.

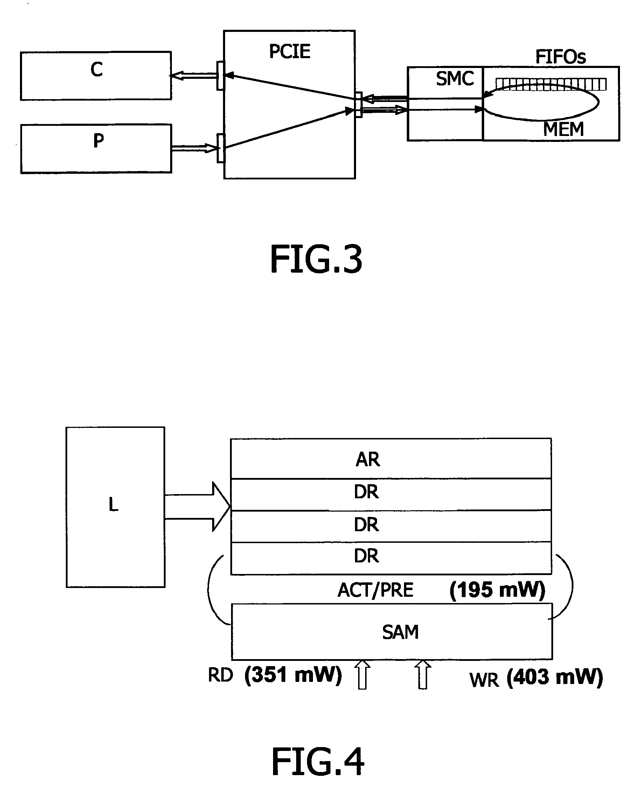

Fig. 3 shows a block diagram of a system on chip according to the first embodiment. A consumer C and a producer P is coupled to a PCI-express network PCIE. The communication between the producer and consumer P, C is performed via the network PCIE and a streaming memory controller SMC to an (external) memory MEM. The (external) memory MEM can be implemented as a DRAM or a SDRAM. As the communication between the producer P and the consumer C is a stream-based communication, FIFO buffers are provided in the external memory MEM for this communication.

The streaming memory controller SMC according to Fig. 3 has two interfaces: one towards PCI Express fabric, and second towards the DRAM memory MEM. The PCI Express interface of the streaming memory controller SMC must perform the traffic shaping on the data retrieved from the SDRAM memory MEM to comply with the traffic rules of the PCI Express network PCIE. On the other interface of the streaming memory controller SMC, the access to the DRAM is performed in bursts, since this mode of accessing data stored in DRAM has the biggest advantage with respect to power consumption. The streaming memory controller SMC itself must provide intelligent arbitration of access to the DRAM among different streams such that throughput and latency of access are guaranteed. Additionally, the SMC also provides functionality for smart FIFO buffer management.

The basic concept of a PCI-Express network is described in "PCI Express Base Specification, Revision 1.0", PCI-SIG, July 2002, www.pcisig.org.

The features of a PCI Express network, which are taken into consideration in the design of the streaming memory controller, are: isochronous data transport support, flow control, and specific addressing scheme. The isochronous support is primarily based on segregation of isochronous and non-isochronous traffic by means of Virtual Channels VCs. Consequently, network resources like bandwidth and buffers are explicitly reserved in the switch fabric for specific streams, such that no interference between streams in different virtual channels VC is guaranteed. Additionally, the isochronous traffic, in the switch fabric, is regulated by scheduling, namely admission control and service discipline.

The flow control is performed on a credit base to guarantee such that no data is lost in the network PCIE due to buffers under/overflows. Each network node is only allowed to transmit network packet through a network link to the other network node when the receiving node has enough space to receive the data. Every virtual channel VC comprises a dedicated flow control infrastructure. Therefore, a synchronization between the source and destination can be realized, through chained PCI Express flow control, separately for every virtual channel VC.

The PCI Express addressing scheme typically uses 32 or 64 bit memory addresses. As no explicit memory addresses are to be used, device and function IDs, i.e. stream IDs, are used to differentiate between different streams. The memory controller SMC itself will generate/convert stream IDs into the actual memory addresses.

In order to simplify the addressing scheme even further, the ID of the virtual channel VC is used as a stream identifier. Since PCI Express allows up to eight virtual channels VCs, half of them can be used for identifying incoming streams and the other half for identifying outgoing streams from the external memory. Therefore, the maximum number of streams that can access the memory through the memory controller SMC is limited to eight. Please note that such a limitation is due to PCI Express that allows for arbitration between streams in different VCs, and not between those inside the same virtual channel VC. However, such limitation is only specific to PCI Express based systems, it is not fundamental for the concepts of the present invention.

Summarizing, the PCI Express interface of the memory controller SMC consists of a full PCI Express interface, equipped additionally with some logic necessary for address translation and stream identification.

In the first embodiment a (DDR)SDRAM memory is used. As an example one can refer to the Micron's 128-Mbit DDR-SDRAM as described in Micron's 128-Mbit DDRRAM specifications, http://download.micron.com/pdf/datasheets/dram/ddr/128MbDDRx4x8x16.pdf is used. Such technology is preferable since it provides desirable power consumption and timing behavior. However, the design is parameterized, and the memory controller SMC can be configured to work also with single rate memory. Since the DDR-SDRAM behaves similar to SDRAM, except the timing of the data lines, we explain basics using SDRAM concepts.

The PCI Express network PCIE provides network services, e.g. guaranteed real-time data transport, through exclusive resource/bandwidth reservation in the devices that are traversed by the real-time streams. When an external DRAM supported by a standard controller is connected to the PCI Express fabric, without having any intelligent memory controller in between, bandwidth and delay guarantees, typically provided by the PCI Express, will not be fulfilled by the memory, since it does not give any guarantees and acts as a "slave" towards incoming traffic.

The design of standard memory controller focuses on delivering the highest possible bandwidth at the lowest possible latency. Such approach is suited for processor data and instruction (cache) access and not for isochronous traffic. To be able to provide the predictable behavior of the PCI Express network extended with the external DRAM, a streaming memory controller is needed, which guarantees a predictable behavior of the external memory for streaming. In addition, we aim to design the memory controller not only for guaranteeing throughput and latency, but also for reducing power consumption while accessing this DRAM.

Fig. 4 shows the logical architecture of a SDRAM for the state when the memory clock is enabled, i.e. the memory is in one of the power up mode. The SDRAM comprise a logic unit L, an memory array AR, and data rows DR. When the clock is disabled, the memory is in low power state (power down mode).

Typical commands applied to a memory are activate ACT, pre-charge PRE, read/write RD/WR, and refresh. The activate command takes care that after charging a bank and row address are selected and the data row (often referred to as a page) is transferred to the sense amplifiers. The data remains in the sense amplifiers until the pre-charge command restores the data to the appropriate cells in the array. When data is available in the sense amplifiers SAM, the memory is said to be in the active state. During such a state reads and writes can take place. After pre-charge command, the memory is said to be in the pre-charge state where all data is stored in cell array. Another interesting aspect of memory operation is a refresh. The memory cells of the SDRAM store data using small capacitors and these must be recharged regularly to guarantee integrity of data. When powered up, the SDRAM memory is instructed by controller to perform refresh. When powered down, SDRAM is in self-refresh mode, (i.e. no clock is enabled) and the memory performs refresh on its own. This state consumes very little power. Getting memory out of the self-refresh mode to the state in which data can be asserted for read or write takes more time than for others modes (e.g. 200 clock cycles, specifically for DDR-SDRAM).

The timing and power management of the memory is important for proper design of the memory controller SMC that must provide specific bandwidth, latency and power guarantees. Reading a full page (equal to 1Kbyte), from an activated SDRAM, may take about 2560 clock cycles (~19.2 us) for burst length of 1 read, 768 clock cycles (~5.8 us) for burst length of 8 reads, and only 516 clock cycles (~3.9 us) for full page burst. These values are based on the specific 128-Mbit DDR-SDRAM with clock period of 7.5 ns as described in "Micron's 128-Mbit DDRRAM specifications,
http://download.micron.com/pdf/datasheets/dram/ddr/128MbDDRx4x8x16.pdf".

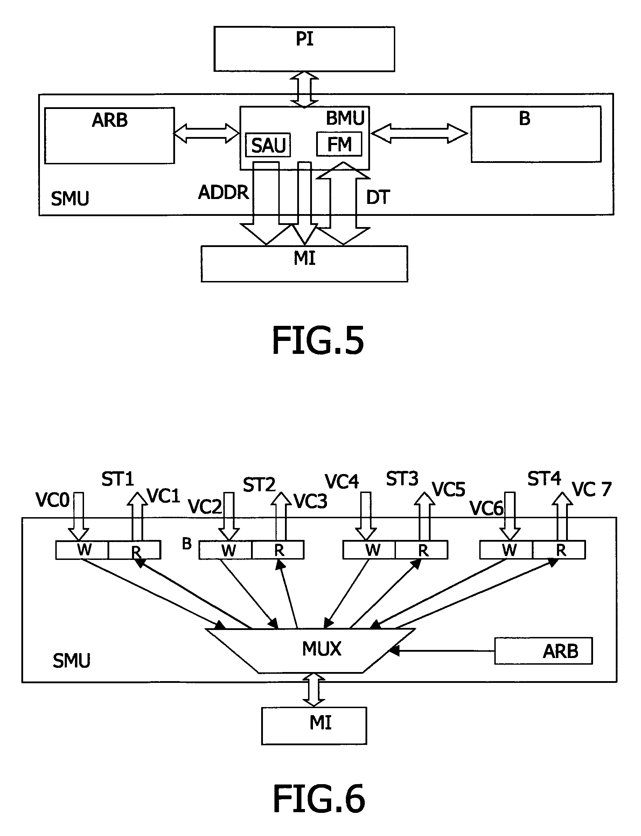

Fig. 5 shows a block diagram of a streaming memory controller SMC according to a second embodiment. The streaming memory controller SMC comprises a PCI-Express interface PI, a streaming memory unit SMU and further interface MI which serves as interface to an (external) SDRAM memory. The streaming memory unit SMU comprises a buffer manager unit BMU, a buffer B, which may be implemented as a SRAM memory, as well as an arbiter ARB. The streaming memory unit SMU that implements buffering in SRAM, is together with the buffer manager used for buffering an access via PCI-Express Interface to the SDRAM. The buffer manager unit BMU serves to react to read or write accesses to SDRAM from the PCI-Express Interface, to manage the buffers (update pointer's registers) and to relay data from/to buffers (SRAM) and from/to SDRAM. In particular, the buffer manager unit BMU may comprise a FIFO manager and a stream access unit SAU.

The stream access unit SAU provides a stream ID, an access type, and the actual data for each stream. For each packet received from PCI Express interface, based on its virtual channel number VC0 - VC7, the stream access unit SAU forwards the data to an appropriate input buffer, implemented in local shared SRAM memory. For data retrieved from (DDR-) SDRAM's FIFOs, and placed in output buffer B in local SRAM, it generates destination address and passes the data to the PCI Express interface PI. The Arbiter ARB decides which stream can access the (DDR-)SDRAM. The SRAM memory implements the input/output buffering, i.e. for pre-fetching and write-back purposes. The FIFO manager, which is at the heart of SMC, implements FIFO functionality for the memory through address generation for streams, access pointers update, and additional controls.

Fig. 6 shows a block diagram of a logical view of the streaming memory controller SMC. Each of the streams ST1-ST4 are associated to a separate buffer. As only one stream at the time can access the external DRAM an arbiter ARB is provided which performs the arbitration in combination with a multiplexer MUX.

The arbitration of the memory access between different real-time streams is essential for guaranteeing throughput and bounded access delay. Assume that whenever data is written to or read from the memory, a full page is either written or read, i.e. the access is performed in bursts. The time needed to access one page (slightly different for read and write operations) can be referred to as a time slot. A service cycle is defined as consisting of a fixed number of time slots. The access sequence repeats and resets as every new service cycle is started.

The arbitration algorithm between streams according to the second embodiment is credit based. Each stream gets a number of credits (time slots) reserved, the same for every service cycle. The number of credits reflects bandwidth requirements of the stream. Each time an access is granted to the stream the number of credits available for the granted stream decreases. Credit count per stream is updated every time the arbitration occurs. Furthermore, credits are reset at the end of service cycle to guarantee periodicity of arbitration process. The credit counts can also be refreshed only (e.g. all decreased by the lowest value of all counts) to provide arbitration memory of previous service cycles, in case adaptive arbitration over a longer time is needed. In extreme case, single service cycle infinitely long can be used.

When multiple streams want to access the memory in the same time slot, the credit count is used as an arbitration criterion. The stream that has used the least of its credits (relatively, measured as ratio between used and reserved credits per current service cycle) gets the access. The denied request is buffered and scheduled (or arbitrated with another incoming request), for the next time slot. In case the credit ratios are the same for two requesting streams, the one that requires lower access latency gets the access first (e.g. read over write).

In this way, every stream (if requesting) gets in worst case the reserved number of accesses to the memory per service cycle, regardless the order of the incoming requests or the behavior of the other streams. This guarantees that the bandwidth requirement for every stream is met.

Now an example of the credit-based arbitration algorithm is described in more detail. A time slot is defined as equal to a page (1KB) access to SDRAM memory MEM that, as calculated before, is equal to 3.9 µs. Moreover, it is assumed that the service cycle has 60 time slots, so it is equal to 234 µs. Therefore, there will be 4273 service cycles per second, what results in the total memory bandwidth of about 2 Gbit/s (4237*60*1KB). It is assumed that 3 streams each having respectively 350 Mbit/s, 700 Mbit/s, and 1050 Mbit/s of bandwidth requirements are provided. Therefore, the reserved credit count per service cycle of the first stream ST1 will be 350/2100 time 60 slots, what equals to 10 slots. Stream 2 and 3 ST2, ST3 will have 20 and 30 reserved credits, respectively. Table 1 shows the stream schedule (row Sdl) that is a result of the arbitration. It also shows credit (bandwidth) utilization levels that determine the arbitration result (rows CS1, CS2, CS3 - measured as ratio between used and reserved credits per current service cycle) per each time slot (row Slot).

**Table 1. Example of the Credit Based Arbitration**

| Slot | 1 | 2 | 3 | 4 | 5 | 6 | 7 | 8 | 9 | 10 | 11 |
|---|---|---|---|---|---|---|---|---|---|---|---|
| CS1 | 0.1 | 0.1 | 0.1 | 0.1 | 0.1 | 0.1 | 0.2 | 0.2 | 0.2 | 0.2 | 0.2 |
| CS2 | 0 | 0.05 | 0.05 | 0.05 | 0.1 | 0.1 | 0.1 | 0.15 | 0.1 | 0.1 | 0.2 |
| CS3 | 0 | 0 | 0.03 | 0.06 | 0.06 | 0.1 | 0.1 | 0.1 | 0.13 | 0.16 | 0.16 |
| Sdl | S1 | S2 | S3 | S3 | S2 | S3 | S1 | S2 | S3 | S3 | S2 |

While the reserved bandwidth is always guaranteed for each stream, the reserved but unused slots can be reused by other streams if necessary. This also enables flexible allocation of the bandwidth. While keeping all guarantees, it enables flexible handling of the unavoidable fluctuations in the network.

Furthermore, sufficient buffering of the incoming requests must be provided to ensure that the above scheme works. A mechanism of stalling the requesting streams in case other streams are granted the access is also required. The stalling mechanism may be implemented using PCI Express flow control, which enables delaying of any stream, separately per each virtual channel VC. The minimal buffering required can be therefore equal to the size of the data accessed from memory during one time slot, i.e. one page. Increasing the access buffering is therefore not needed. However, it will decrease access latency, as such buffers then behave as pre-fetch or write-back buffers.

The mentioned over-dimensioning of I/O buffers relaxes the arbitration. The proposed arbitration algorithm is all parameterized. Most of the aspects of the arbitration can be programmed. For example, the particular arbitration strategy can be chosen at the configuration time, the granularity of memory access (a time slot) can be changed from a page to a burst of other length, and finally the number of time slots per service cycle can be configured as well.

Two types of heuristics for arbitration are used, namely: time-based and event-based. In the time-based arbitration, every service cycle consists of a fixed number of time slots, which are aligned (in time) to each other. Thus, all time slots start at the predefined time and therefore granted access starts at the predetermined moments of time, namely at the beginning of each slot, regardless when the actual request was issued. In contrast, in the event-based arbitration, a time slot starts, only when some stream has issued a request, and the granted access is served immediately. The differences between mentioned arbitrations are: the event based arbitration is more relaxed with respect to power and provides better response latency for requests, the time based arbitration has simpler control, implementation, and lower jitter. Nevertheless, both policies converge to exactly the same behaviour when the number of requests is equal or exceeds total number of available time slots, per service cycle.

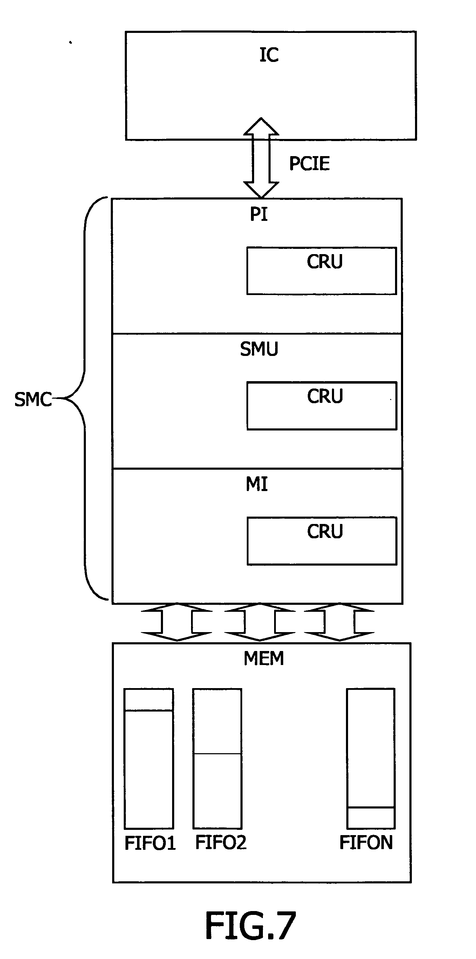

Fig. 7 shows a block diagram of an architecture of a system on chip according to a third embodiment. The architecture of the third embodiment substantially corresponds to the architecture of the first embodiment. In particular, the block diagram of Fig. 7 corresponds to the block diagram of Fig. 3, but the streaming memory controller SMC is here described in more detail. The streaming memory controller SMC is connected to at least one processing unit IC, which may also be a consumer C or a producer P. Please note that only one processing unit is shown in Fig. 7. However, several processing units may be present. The streaming memory controller SMC is coupled to the processing unit via a PCI-Express network PCIE. The streaming memory controller SMC is used to control a memory MEM, possibly an external memory, and comprises a PCI-Express interface unit PI, which is provided to guarantee a full PCI-Express interface functionality of the streaming memory controller SMC. Configuration register units may be provided in the PCI-Express interface PI, the streaming memory unit and the memory interface MI.

The streaming memory controller SMC further comprises a streaming memory unit SMU. The streaming memory unit SMU is provided to implement the flow control, i.e. to allocate and manage the flow control buffer as well as the synchronization. The streaming memory unit SMU is further provided to handle the stream arbitration for the access to the external memory MEM, which can be implemented as a DRAM. The stream arbitration is performed by tuning the network arbitration and tuning the memory timing. The streaming memory unit SMU is further provided to handle the virtual channels VC as implemented by a PCI-Express network. In particular, the address conversion between the PCI-Express network and the SDRAM memory is required.

The streaming memory controller adapts the traffic generated by the network (based on a PCI-Express network) to the specific behavior of the external memory MEM which may be implemented as a SDRAM. In other words, the streaming memory controller SMC serves to provide a bandwidth guarantee for each of the streams, to provide for bounded delivery time and for an error free transport of data to and from the external memory MEM. As the streaming memory controller SMC is designed to control the accesses to the external memory, the bandwidth arbitration in the streaming memory controller SMC is based on the same concept as in the network arbitration, i.e. time slots and the time slot allocation, however, the sizes of the time slots have to be adapted in order to fit to the behavior of a SDRAM.

In other words, the streaming memory unit SMU implements the network services of the PCI-Express network to the external memory MEM. Accordingly, the streaming memory unit SMU translates the data streams from the PCI-Express network into bursts for accessing the external SDRAM memory in order to divide the total available bandwidth of the SDRAM into a number of burst accesses. The number of burst accesses can be assigned to streams from the network in order to fulfill their bandwidth requirements. The streaming memory unit SMU also serves to implement a synchronization mechanism in order to comply with the flow control mechanism of the PCI-Express network. This synchronization mechanism may include a blocking of a reach request. As the streaming memory controller SMC is designed to handle several separate streams, the streaming memory unit SMU is designed to created, maintain and manage the required buffers.

Regarding the flow control, the buffers required for the flow control will be larger than flow control buffers implemented within an PCI-Express network. Furthermore, the actual control of these buffers will be different because of the particular timing of SDRAM accesses being fundamentally different from accesses within the PCI-Express network. The virtual channel VC implementation within the streaming memory controller SMC need to deal with different sizes of time slots, flow control buffers and the specific behavior of the SDRAM in order to create transparent and independent channels within the shared memory.

It should be noted that the same concept can be employed for any other component that is used for implementing a specific streaming framework. An example thereof may be storage devices like hard disk drives HDD as they are based on a different behavior than the above-mentioned solid state silicon memories. The streaming memory controller basically comprises all three main parts, the PCI-Express interface PI, a streaming memory unit SMU and a SDRAM memory controller MC. The interface PI is designed to provide a full functionality of PCI-Express interface according to the PCI-Express specification. Furthermore, the interface PI serves to pass information regarding the identification to which of the streams a specific block of data is associated to. This can be implemented using the virtual channel numbers or the PCI-Express packet addresses.

The memory controller MC for the external memory like a SDRAM serves to control the external memory and to provide the respective command facility.

It should be noted that although in the above embodiments the memory MEM is described as an external memory, such a memory may also be implemented as an internal memory.

Accordingly, the principles of the above-mentioned embodiments of the invention can be applied to all systems comprising an interconnect infrastructure such as a bus or a network supporting specific services while other (external) devices do not implement such network services. One example of such an interconnect infrastructure is a PCI-express network which can implement a bandwidth allocation service, a flow control service or the like, while an (external) SDRAM memory does not implement such services.

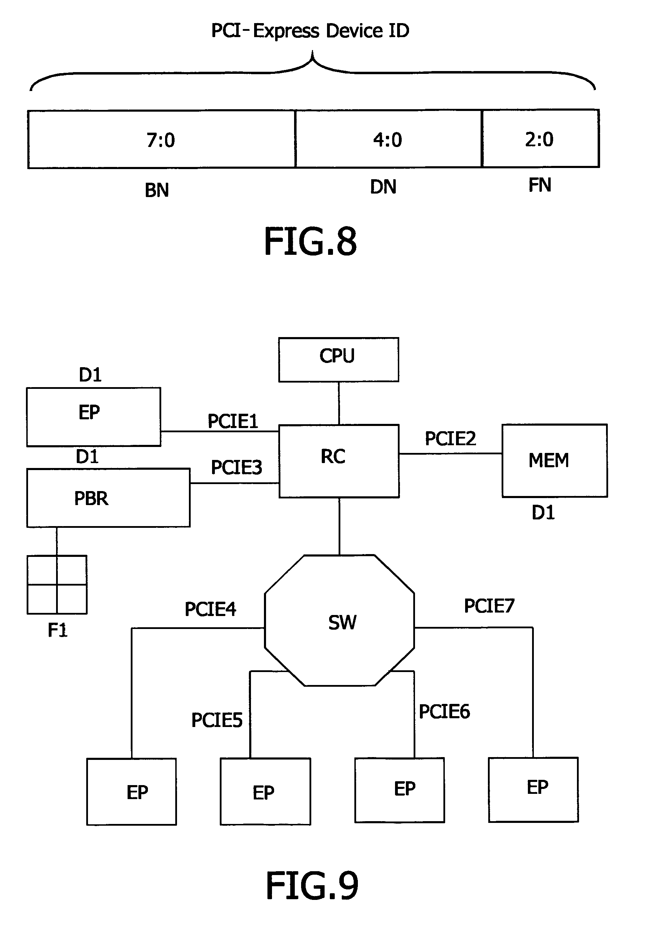

Fig. 8 shows a format of an ID within a PCI-Express network. Accordingly, the ID is based on the bus number BN, the device number DN and the function number FN. This identification is used for configuration purposes as well as for routing the message packets required for carrying control data.

Fig. 9 shows a configuration within a PCI-Express system. The system comprises a central processing unit CPU, connected to a route complex RC, the route complex RC in turn is coupled to a memory MEM via a PCI-express connection PCIE2, to a PCI-express end point EP via a PCI-Express connection PCIE1, to a PCI-Express-PCI bridge PBR via a PCI-Express connection PCIE3. A switch s is connected to several PCI-Express end points EP via PCI-connections PCIE4-PCIE7.

Any function within the PCI-Express network can be addressed separately. For example, 01:29:03 refers to function number 3 in a device number 29 on a bus 1.

Such an addressing scheme can also be used for addressing the respective streaming buffers associated to the different functions implemented within the PCI-Express network. The typical 32/64 bit memory address (of the streaming buffers) can be replaced by a 16-bit function ID. Accordingly, the bandwidth utilization is improved as less overhead within the headers are required within the packets. Furthermore, the addressing of the streaming buffers is independent from the memory addressing scheme. The memory addressing is therefore not exposed at system level such that the overall system is less complex.

On the other hand, merely eight different functions can be addressed within a single device such that a maximum of eight streaming buffers can be provided for a single device. This is consistent with the available eight different virtual channels defined by the PCI-Express specification.

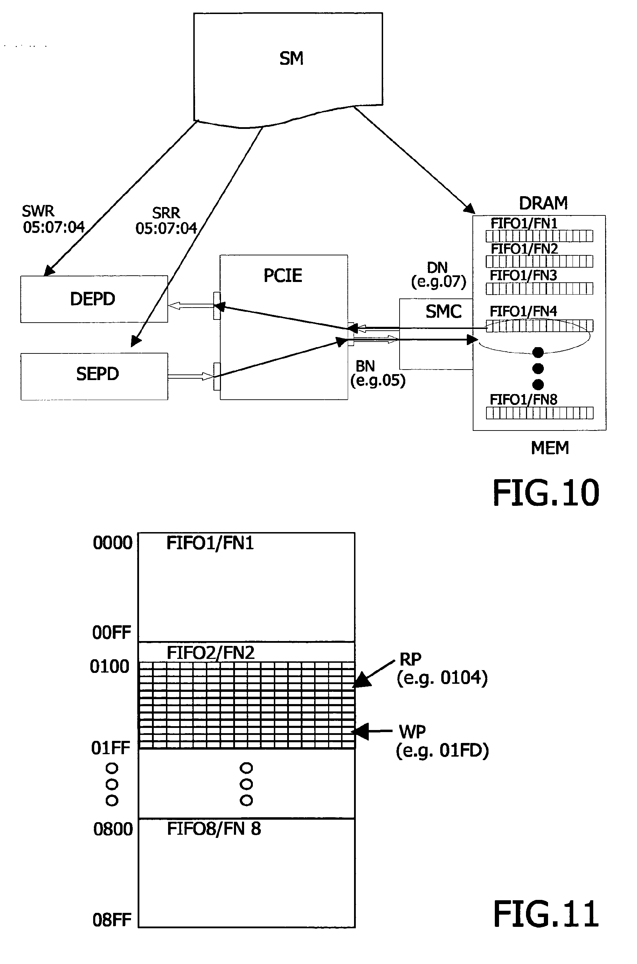

Fig. 10 shows a block diagram of a system on chip according to the fourth embodiment. The architecture of the third embodiment corresponds to the architecture described according to Fig. 3. A destination end-point device DEPD as well as a source end-point device SEPD (producer, consumer) is coupled to a PCI-Express network PCIE which in turn is coupled to an (external) memory MEM via a steaming memory controller SMC. The streaming memory controller SMC serves to perform the address translation as well as the buffer management. Here, the addressing of the different streaming buffers within the memory MEM is shown in more detail.

The communication of the system on chip according to Fig. 10 is based on streaming data, wherein the data is buffered in streaming buffers implemented as FIFO, which are located in a shared memory MEM. The destination and source device DEPD, SEPD, the producer P and the consumer C, are incorporated in the PCI-Express network and therefore use the PCI-Express identification for the devices, i.e. bus:device:function ID, in order to address a particular streaming buffer. The particular association of mapping of buffers to a specific stream and the mapping of buffers to source/destination devices can be performed by a stream manager (e.g. by a configuration software at runtime). The source/destination devices (user/consumer) read/write from/to certain PCI-Express IDs. The streaming memory controller SMC allocates a specific amount of memory for a FIFO buffer. Thereafter, the PCI-Express ID (function ID) is mapped to the streaming buffer.

The streaming memory controller SMC locally translates the PCI-Express buffer ID into the absolute memory address for accessing the memory MEM (which may be implemented as a SDRAM). Furthermore, the streaming memory controller SMC serves to constantly monitor the read and write pointers for each of the streaming FIFO buffers. An update can be performed during every read/write transaction.

It should be noted that the memory MEM should also be able to be accessed for random accesses using the absolute memory addressing.

Although in Fig. 10 only one memory MEM has been described, the above-mentioned scheme can be used for every PCI-Express streaming transaction, in particular for sequential addresses like a direct memory access DMA address, and the above principles of the invention may also be applied to physically distributed memory systems with two or more separate memories. In such a situation, a separate memory controller should be provided for every memory, wherein every memory should comprise a separate device address. Here, the number of streaming buffers will not be limited to eight.

The streaming memory controller SMC serves to translate the ID of the FIFO into a local and absolute memory address. The FIFO 1 in the memory MEM may comprise 256 KB at 0000 address. The FIFO 2 can be allocated at address 0100. The eighth FIFO, FIFO 8, can be allocated at address 0800. The first FIFO 1 with the function number FN1 can be associated to address 0000. The FIFO 2 with the function number FN2 can be associated to the address 0200. The FIFO 8 with the function number FN8 can be associated to the eighth FIFO address 0800.

Fig. 11 shows an example of the memory allocation within the memory of Fig. 10. Here, eight buffers are provided, each with 256 K works and each having read and write pointers. The FIFO buffers are implemented in a circular fashion. If any of the incremented pointers reach the end of the buffer, the pointer will be wrapped to the beginning of the buffer. Such an implementation is advantageous as the synchronization between the source (producer P) and the destination (consumer C) can be implemented. Furthermore, the buffer overflow, the buffer underflow, the overwriting of data can be prevented.

Table 2 shows an example of the translation from a PCI-Express function number to a logical FIFO number and the absolute physical address that correspond to Fig. 10.

**Table 2: An example of a translation from a PCI-Express function number to a logical FIFO number and an absolute physical address.**

| **Destination-Number (PCI-Express Function Number)** | Logical FIFO Number | Physical Address |
|---|---|---|
| 05:07:01 (Function 1 FN1) | FIFO1 | 0000 hex |
| 05:07:02 (Function 1 FN2) | FIFO2 | 0100 hex |
| ... | ... | ... |
| 05:07:08 (Function 1 FN8) | FIFO8 | 0800 hex |

The memory controller SMC according to the above embodiments can be designed in VHDL and successfully synthesized. For the memory controller SMC's logic, internal Philips CMOS12 (0.12 µm) technology library PcCMOS 12corelib (standard Vt) is used. For SRAM, internal Philips high-speed high-density single port SRAM technology library C12xSRAM (standard Vt) is used. For simulation and verification, we have assumed 128 Mbits Micron's DDR-SDRAM memory.

If a DDR-SDRAM memory is used in the design operating at clock frequency of 133MHz, it needs to access the data twice every clock cycle, for a SRAM buffer operating at double frequency (266MHz) to be synchronized with the DDR-SDRAM and to provide the same bandwidth. All internal blocks of SMC (FIFO manager, arbiter, and SRAM) work at 266 MHz, and all these blocks use the same clock to be synchronized with each other.

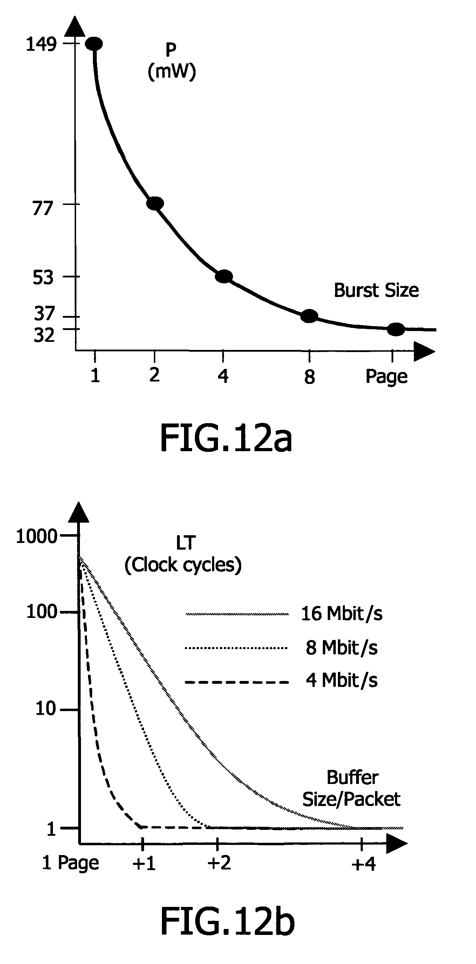

Two SRAM cells, each having 16-bit wide data bus, and area of 0.103 mm2 are implemented as one example. Each cell has 16 Kbytes. Hence, the total size of buffer space becomes 32 Kbytes (32 pages). The buffer space can be divided between streams based on latency requirements and on actual data rate of each stream. Here, four pages are assumed per stream, although for small and medium data rates this may be far too much. The total silicon area is 0.208 mm2, of which 284 µm2 is for arbiter, 1055 µm2 is for FIFO manager, and 0.206 mm2 is for SRAM. Concerning power consumption of the SMC, the SRAM consumes 8 mW operating at 266 MHz. The power dissipation of the logic can be neglected. As it is seen from the above figures, the SRAM dominates the silicon and power consumption of the SMC design. The power consumption of the DDR-SDRAM controlled by the SMC in particular playback application (two uncompressed audio streams synchronized in the memory) is shown in figure 12a.

For design verification, a test bench provides the stimulus to the design using test vectors. The test bench pumps data into SMC from test vector file and monitors and check the output ports of SMC and internal registers of SMC to verify functionality and timing of the design.

While playing with the design by changing its parameters (e.g. buffer and burst sizes, arbitration strategies), it is possible to experiment to obtain results for trade-offs in the design of real-time streaming memory controller for off-chip memories. Examples of such trade-offs, which can be visualized by exercising the design, are relations between burst sizes and input/output buffer sizes versus worst-case delay for data access, external memory power dissipation, and latency within SMC.

As an example, in Fig. 12a, a power dissipation of external DDR-SDRAM versus the burst size of the access for a 10 Mbit/s data read from this memory is depicted. In Fig. 12b, a worst-case delay LT versus buffer size in network packets is depicted.

The real-time streaming memory controller according to the invention supports off-chip network services and real-time guarantees for accessing external DRAM in a streaming manner.

The memory controller SMC has been designed to allow accessing external DRAM from within a PCI Express network. This memory controller SMC has been designed in VHDL, synthesized, and verified. The complexity figures in terms of consumed silicon and power are available. In addition, a design space can be explored for a particular application, and certain trade-offs can be visualized by exercising the design with different parameters and arbitration policies. This all enables us to analyze the concept of streaming memory controller, and to understand the problems and issues in its design. We will use this knowledge in the design of specific SMC for mobile interconnect.

Here, a memory controller SMC is realized that gives bandwidth guarantees for SDRAM access in low power way. The arbitration algorithms, though always guarantee bandwidth, are still flexible to cope with network fluctuations and jitter. PCI Express has limitations of 8 streams that can independently be arbitrated. There are certain important trade-offs for SMC design as buffer size (cost) versus power and access delay. The increase of the I/O buffers relaxes the arbitration, lowers the access latency, and reduces the cumulated bandwidth required from the SDRAM.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim in numerating several means, several of these means can be embodied by one and the same item of hardware. The mere fact that certain measures are resided in mutually different dependent claims does not indicate that a combination of these measures cannot be used to advantage.

Furthermore, any reference signs in the claims shall not be constitute as limiting the scope of the claims.

## Claims

1. A memory controller (SMC) for coupling a memory (MEM) to a network (N) comprising:
- a first interface (PI) for connecting the memory controller (SMC) to the network (N), the first interface (PI) being arranged for receiving and transmitting data streams; and
- a streaming memory unit (SMU) coupled to the first interface (PI) for controlling data streams (ST1 - ST4) between the network (N) and the memory (MEM), said streaming memory unit (SMU) comprises a buffer (B) for temporarily storing at least part of the data streams (ST1 - ST4), and a buffer managing unit (BMU) for managing a temporarily storing of data streams (ST1- ST4) in the buffer (B),
- a second interface (MI) coupled to a streaming memory unit (SMU) for connecting the memory controller (SMC) to the memory (MEM), and for exchanging data with the memory (MEM) in bursts,
wherein said streaming memory unit (SMU) is arranged to implement network services of the network (N) onto the memory (MEM),
wherein the memory (MEM) is at least partly organized as FIFOs, and a stream identifier is associated to every data stream,
the stream memory unit (SMU) is arranged for controlling a data stream (ST1 - ST4) from/or to the network (N) by directing a particular data stream (ST1-ST4) to a particular FIFO in the memory (MEM) according to the stream identifier of the data stream, and for arbitrating between the streams for access to the memory (MEM),
the second interface (MI) is arranged for exchanging a relatively course grained stream of data with the memory and a relatively fine grained stream of data with the network,
**characterized in that** the network (N) is a PCI-Express network, and a PCI-Express ID is used in the network (N) for addressing, wherein the first interface (PI) is a PCI express interface, and wherein the streaming memory unit (SMU) is arranged for converting a PCI-express ID into a FIFO-memory address and a FIFO-memory address into a PCI-express ID.

2. A memory controller according to claim 1,
wherein the first interface (PI) is adapted for traffic shaping of the data received from the memory (MEM) to comply with traffic rules of the network (N), and
wherein the second interface (MI) is adapted for traffic shaping of the data retrieved from the network (N) to comply with traffic rules of the memory (MEM).

3. Method for coupling a memory (MEM) to a network (N) comprising the steps of:
- receiving and transmitting data streams (ST1 - ST4) via a first interface (PI) for connecting a memory controller (SMC) to the network (N);
- controlling the data streams (ST1 - ST4) between the network (N) and the memory (MEM) by a streaming memory unit (SMU);
- temporarily storing at least part of the data streams (ST1 - ST4) in a buffer (B);
- managing the temporarily storing of the data streams (ST1 - ST4) in a buffer (B);
- connecting the streaming memory controller (SMC) to the memory (MEM) via a second interface (NI) and exchanging data with the memory (MEM) in bursts;
- implementing network services of the network (N) onto the memory (MEM),
wherein the memory (MEM) is at least partly organized as FIFOs, and a stream identifier is associated to every data stream,
controlling a data stream (ST1 - ST4) from/or to the network (N) by directing a particular data stream (ST1-ST4) to a particular FIFO in the memory (MEM) according to the stream identifier of the data stream, and for arbitrating between the streams for access to the memory (MEM),
exchanging a relatively course grained stream of data with the memory and a relatively fine grained stream of data with the network,
**characterized in that** the network (N) is a PCI-Express network, and a PCI-Express ID is used in the network (N) for addressing, wherein the first interface (PI) is a PCI express interface, and comprising the step of:
- converting a PCI-express ID into a FIFO-memory address and a FIFO-memory address into a PCI-express ID.

4. Data processing system, comprising:
- a network (N) having a plurality of processing units (P) and an interconnect means (IM) for coupling the processing units (P) and
- a memory controller (SMC) for coupling the network (N) to a memory (MEM) according to one of the claims 1 to 2.

## Patentansprüche

1. Ein Speicher-Controller (SMC) zum Koppeln eines Speichers (MEM) an ein Netzwerk (N), umfassend:
- eine erste Schnittstelle (PI) zum Verbinden des Speicher-Controllers (SMC) mit dem Netzwerk (N), wobei die erste Schnittstelle (PI) für das Empfangen und Senden von Datenströmen angeordnet ist, und
- eine an die erste Schnittstelle (PI) gekoppelte Streaming-Speichereinheit (SMU) zum Steuern von Datenströmen (ST1-ST4) zwischen dem Netzwerk (N) und dem Speicher (MEM), wobei besagte Streaming-Speichereinheit (SMU) einen Puffer (B) zum Zwischenspeichern zumindest eines Teils der Datenströme (ST1-ST4) und eine Pufferverwaltungseinheit (BMU) zum Verwalten einer Zwischenspeicherung von Datenströmen (ST1-ST4) in dem Puffer (B) umfasst,
- eine an eine Streaming-Speichereinheit (SMU) gekoppelte zweite Schnittstelle (MI) zum Verbinden des Speicher-Controllers (SMC) mit dem Speicher (MEM) und zum Austauschen von Daten mit dem Speicher (MEM) in Form von Bursts,
wobei besagte Streaming-Speichereinheit (SMU) für das Implementieren von Netzdiensten des Netzwerkes (N) auf den Speicher (MEM) angeordnet ist,
wobei der Speicher (MEM) zumindest teilweise in Form von FIFOs aufgebaut ist und jedem Datenstrom ein Strombezeichner zugeordnet ist,
die Streaming-Speichereinheit (SMU) für das Steuern eines Datenstroms (ST1-ST4) aus dem oder zu dem Netzwerk (N) durch Lenken eines bestimmten Datenstroms (ST1-ST4) zu einem bestimmten FIFO in dem Speicher (MEM) gemäß dem Strombezeichner des Datenstroms und für das Entscheiden zwischen den Strömen hinsichtlich des Zuganges zu dem Speicher (MEM) angeordnet ist,
die zweite Schnittstelle (MI) für das Austauschen eines relativ grobkörnigen Datenstroms mit dem Speicher und eines relativ feinkörnigen Datenstroms mit dem Netzwerk angeordnet ist,
**dadurch gekennzeichnet, dass** das Netzwerk (N) ein PCI-Express-Netzwerk ist und eine PCI-Express-ID in dem Netzwerk (N) zum Adressieren verwendet wird, wobei die erste Schnittstelle (PI) eine PCI-Express-Schnittstelle ist und wobei die Streaming-Speichereinheit (SMU) für das Konvertieren einer PCI-Express-ID in eine FIFO-Speicher-Adresse und einer FIFO-Speicher-Adresse in eine PCI-Express-ID angeordnet ist.

2. Ein Speicher-Controller nach Anspruch 1,
wobei die erste Schnittstelle (PI) für die Verkehrsformung der aus dem Speicher (MEM) empfangenen Daten zur Einhaltung von Verkehrsregeln des Netzwerkes (N) ausgelegt ist, und
wobei die zweite Schnittstelle (MI) für die Verkehrsformung der aus dem Netzwerk (N) abgerufenen Daten zur Einhaltung von Verkehrsregeln des Speichers (MEM) ausgelegt ist.

3. Verfahren zum Koppeln eines Speichers (MEM) an ein Netzwerk (N), umfassend die folgenden Schritte:
- Empfangen und Senden von Datenströmen (ST1-ST4) über eine erste Schnittstelle (PI) zum Verbinden eines Speicher-Controllers (SMC) mit dem Netzwerk (N),
- Steuern der Datenströme (ST1-ST4) zwischen dem Netzwerk (N) und dem Speicher (MEM) durch eine Streaming-Speichereinheit (SMU),
- Zwischenspeichern zumindest eines Teils der Datenströme (ST1-ST4) in einem Puffer (B),
- Verwalten der Zwischenspeicherung der Datenströme (ST1-ST4) in einem Puffer (B),
- Verbinden des Streaming-Speicher-Controllers (SMC) mit dem Speicher (MEM) über eine zweite Schnittstelle (MI) und Austauschen von Daten mit dem Speicher (MEM) in Form von Bursts,
- Implementieren von Netzdiensten des Netzwerkes (N) auf den Speicher (MEM),
wobei der Speicher (MEM) zumindest teilweise in Form von FIFOs aufgebaut wird und jedem Datenstrom ein Strombezeichner zugeordnet wird,
Steuern eines Datenstroms (ST1-ST4) aus dem oder zu dem Netzwerk (N) durch Lenken eines bestimmten Datenstroms (ST1-ST4) zu einem bestimmten FIFO in dem Speicher (MEM) gemäß dem Strombezeichner des Datenstroms und Entscheiden zwischen den Strömen hinsichtlich des Zuganges zu dem Speicher (MEM),
Austauschen eines relativ grobkörnigen Datenstroms mit dem Speicher und eines relativ feinkörnigen Datenstroms mit dem Netzwerk,
**dadurch gekennzeichnet, dass** das Netzwerk (N) ein PCI-Express-Netzwerk ist und eine PCI-Express-ID in dem Netzwerk (N) zum Adressieren verwendet wird, wobei die erste Schnittstelle (PI) eine PCI-Express-Schnittstelle ist, und umfassend folgenden Schritt:
- Konvertieren einer PCI-Express-ID in eine FIFO-Speicher-Adresse und einer FIFO-Speicher-Adresse in eine PCI-Express-ID.

4. Datenverarbeitungssystem, umfassend:
- ein Netzwerk (N) mit einer Mehrzahl von Verarbeitungseinheiten (P) und einem Verbindungsmittel (IM) zum Koppeln der Verarbeitungseinheiten (P) und
- einen Speicher-Controller (SMC) zum Koppeln des Netzwerkes (N) an einen Speicher (MEM) nach einem der Ansprüche 1 bis 2.

## Revendications

1. Contrôleur de mémoire (SMC) pour raccorder une mémoire (MEM) à un réseau (N) comprenant :
- une première interface (PI) pour raccorder le contrôleur de mémoire (SMC) au réseau (N), la première interface (PI) étant disposée pour recevoir et transmettre des flux de données ; et
- une unité de mémoire en continu (SMU) raccordée à la première interface (PI) pour contrôler des flux de données (ST1 - ST4) entre le réseau (N) et la mémoire (MEM), ladite unité de mémoire en continu (SMU) comprenant un tampon (B) pour sauvegarder temporairement au moins une partie des flux de données (ST1 - ST4), et une unité de gestion de tampon (BMU) pour gérer un stockage temporaire des flux de données (ST1 - ST4) dans le tampon (B),
- une deuxième interface (MI) raccordée à une unité de mémoire en continu (SMU) pour raccorder le contrôleur de mémoire (SMC) à la mémoire (MEM), et pour échanger des données sous forme de rafales avec la mémoire (MEM),
dans lequel ladite unité de mémoire en continu (SMU) est disposée de manière à réaliser des services de réseau du réseau (N) dans la mémoire (MEM),
dans lequel la mémoire (MEM) est au moins en partie organisée sous forme de FIFO et un identificateur de flux est associé à chaque flux de données,
l'unité de mémoire en continu (SMU) est agencée de manière à contrôler un flux de données (ST1 - ST4) provenant du réseau (N) et/ou allant vers celui-ci en dirigeant un flux de données particulier (ST1 - ST4) vers un FIFO particulier dans la mémoire (MEM) en fonction de l'identificateur de flux du flux de données, et de manière à effectuer un arbitrage entre les flux pour l'accès à la mémoire (MEM),
la deuxième interface (MI) est agencée de manière à échanger un flux de données de granularité assez importante avec la mémoire et un flux de données de granularité assez fine avec le réseau,
**caractérisé par le fait que** le réseau (N) est un réseau PCI-Express et qu'un ID PCI-Express est utilisé dans le réseau (N) pour l'adressage, dans lequel la première interface (PI) est une interface PCI-Express et **par le fait que** l'unité de mémoire en continu (SMU) est agencée pour convertir l'ID PCI-Express en une adresse mémoire de FIFO et une adresse mémoire de FIFO en un ID PCI-Express.

2. Contrôleur de mémoire selon la revendication 1,
dans lequel la première interface (PI) est agencée pour mettre en forme le trafic des données reçues de la mémoire (MEM) pour respecter les règles de trafic du réseau (N), et
dans lequel la deuxième interface (MI) est agencée pour mettre en forme le trafic des données reçues du réseau (N) pour respecter les règles de trafic de la mémoire (MEM).

3. Procédé de raccordement d'une mémoire (MEM) à un réseau (N) comprenant les étapes consistant à :
- recevoir et transmettre des flux de données (ST1 - ST4) par l'intermédiaire d'une première interface (PI) pour raccorder un contrôleur de mémoire (SMC) au réseau (N) ;
- contrôler les flux de données (ST1 - ST4) entre le réseau (N) et la mémoire (MEM) grâce à une unité de mémoire en continu (SMU) ;
- sauvegarder temporairement au moins une partie des flux de données (ST1 - ST4) dans un tampon (B) ;
- gérer le stockage temporaire des flux de données (ST1 - ST4) dans un tampon (B) ;
- raccorder le contrôleur de mémoire en continu (SMC) à la mémoire (MEM) par l'intermédiaire d'une deuxième interface (NI) et échanger des données sous forme de rafales avec la mémoire (MEM) ;
- réaliser des services de réseau du réseau (N) dans la mémoire (MEM),
dans lequel la mémoire (MEM) est au moins en partie organisée sous forme de FIFO et un identificateur de flux est associé à chaque flux de données,
contrôler un flux de données (ST1 - ST4) provenant du réseau (N) et/ou allant vers celui-ci en dirigeant un flux de données particulier (ST1 - ST4) vers un FIFO particulier dans la mémoire (MEM) en fonction de l'identificateur de flux du flux de données, et de manière à effectuer un arbitrage entre les flux pour l'accès à la mémoire (MEM),
échanger un flux de données de granularité assez importante avec la mémoire et un flux de données de granularité assez fine avec le réseau,
**caractérisé par le fait que** le réseau (N) est un réseau PCI-Express et qu'un ID PCI-Express est utilisé dans le réseau (N) pour l'adressage, dans lequel la première interface (PI) est une interface PCI-Express, et comportant l'étape consistant à :
- convertir l'ID PCI-Express en une adresse mémoire de FIFO et une adresse mémoire de FIFO en un ID PCI-Express.

4. Système de traitement de données comprenant :
- un réseau (N) ayant une pluralité d'unités de traitement (P) et un moyen d'interconnexion (IM) pour raccorder les unités de traitement (P) et
- un contrôleur de mémoire (SMC) pour raccorder le réseau (N) à une mémoire (MEM) selon l'une des revendications 1 à 2.
